**Europäisches Patentamt**

**European Patent Office**

**Office européen des brevets**

(19)

(11) Veröffentlichungsnummer: **0 098 907**
**A1**

(12) # EUROPÄISCHE PATENTANMELDUNG

(21) Anmeldenummer: **82810310.1**

(22) Anmeldetag: **16.07.82**

(51) Int. Cl.³: **F 03 G 7/00**

(43) Veröffentlichungstag der Anmeldung:
**25.01.84** Patentblatt **84/4**

(84) Benannte Vertragsstaaten:
**AT BE CH DE FR GB IT LI LU NL SE**

(71) Anmelder: **Hintermann, Fritz**
**Müseigenstrasse**
**CH-5712 Beinwil am See(CH)**

(72) Erfinder: **Hintermann, Fritz**
**Müseigenstrasse**
**CH-5712 Beinwil am See(CH)**

(54) **Umwandlung von Thermischer Energie in Antriebs Energie.**

(57) Das Wesentliche der Anlage besteht darin, dass bei niederen Temperaturen durch Aufwärmen und Abkühlen von Wärmetauschern (6-15), die mit Kältemittel beschickt sind, über einen Doppelkolben (2) ein mechanischer Antrieb entsteht. Die Wärme kann Solarwärme sein oder sie kann sich zusammensetzen aus einer Vielzahl von Abwärme, die aus technischen und chemischen Prozessen entsteht, wie Industrie-Abwärme von Kernkraftwerken, Heizungen, Haushaltungen, Lüftungen, Kühlungen, Rückkühlwerken, Abgasen, Motoren-Abwärme, Erdwärme. Diese Abwärme geht noch oft ungenutzt verloren.

Zur Kühlung der Wärmetauscher wird See-, Fluss-, Meerwasser, oder Schmelz- oder Grundwasser benützt. Zur Kühlung der Wärmetauscher kann auch Kaltluft verwendet werden.

Die Anlage dient der Erzeugung von mechanischer Antriebsenergie, die an den Kolbenstangen abgenommen werden kann. Die mechanische Energie ihrerseits kann für alle Antriebsformen weiter verwendet werden, so auch zur Erzeugung von Elektrizität.

Es können mehrere Anlagen mittels Kurbelwellen, Riemen, Zahnrädern, Kupplungen, Ketten zusammengebaut werden, so dass es möglich ist, sie als Block oder stufenweise arbeiten zu lassen.

EP 0 098 907 A1

./...

Figur Nr. 1

Bezeichnung der Anlage

Umwandlung von termischer Energie in Antriebsenergie

Der Erfindung liegt insbesondere die Aufgabe zu Grunde, ein
Verfahren zur Ausnutzung der Wärme zu schaffen, die sich in
Antriebsenergie umwandelt.

Primär ist daran gedacht, Wärme von Solarenergie, wie sie in
einer Vielzahl von termischen Prozessen, industrieller Abwärme, warmer Abgase, Haushalt, Kernkraftabwärme, Lüftungskanälen, Kühlungen, Rückkühlungswerken, Heizungsabwärme und Abgase vorkommt, zu benutzen. Diese Wärme wird dazu verwendet,
die Wärmeaustauscher aufzuheizen und mit Hilfe von Kältemittelfluid im innern des Austauschers einen Druck zu erzeugen.
Um ein Druckgefälle zu erzeugen, müssen die Wärmeaustauscher
abwechslungsweise gekühlt und erwärmt werden. Die Abkühlung
der Wärmeaustauscher geschieht durch übersprühen derselben
mit kaltem Wasser unter zuhilfenahme des Feuchtkugelwertes.
Es kann Grund-, See-, Fluss-, Meer-, Regen- oder Schmelzwasser sein.

Die Anlage kann auch mit warmem Wasser und kalter Luft oder
Gase oder mit Kalter und warmer Luft oder Gase mit oder ohne
zuhilfenahme des Kaltwassers in Betrieb gehalten werden.

Beschreibung der Anlage

Sie besteht aus den Teilen:

| 1 | | | Zylinder |
| 2 | | | Kolben |
| 3 | | | Kraftübertragungsbleuel |
| 4 | | | Druckleitung |
| 5 | | | Entspannungsleitung |
| 6 bis 15 | | | Wärmeaustauscher mit Düsenstöcke |
| 16 bis 25 | | | Ventile der Entspannungsleitung |
| 26 bis 35 | | | Ventile der Druckleitung |
| 36 bis 40 | | | Klappenumsteller |
| 41 | | | Ventilator mit Motor |
| 42 bis 46 | | | Dreiwegventile |
| 47 | | | Pumpe |
| 48 | | | Regulierventil für Frischwasser |
| 49 | + | 50 | Absperrventil Wasserzuleitung |
| 52 | | | Schwimmerventil |
| 53 | | | Ablassventil |
| 54 | | | Wasserbecken |
| 55 | | | Ausgleichsleitung |
| 56 | + | 57 | Düsen mit Düsenstöcke |
| 58 | | | Luftkanäle |
| 59 | | | Einfüllstutzen |

Funktion der Anlage

Die Anlage wird zuerst evakuiert, dann mit Kältemittel, dem
nach Möglichkeit etwas Oel beigegeben wird, soweit in die
Wärmetauscher gefüllt, dass ein guter Wärmeübergang an das
Medium gewährleistet ist.

Dann werden die Ventile Nr. 16 bis Nr. 35 geschlossen, der
Ventilator in Betrieb genommen und die Klappen so eingestellt, dass die Warmluft durch die Wärmetauscher Nrn. 6,
8, 10, 12 und 14 strömt. Das Wasser wird so eingestellt, dass
die Wärmetauscher Nrn. 7, 9, 11, 13, und 15 berieselt und
gekühlt werden. Wenn die max. mögliche Temperaturdifferenz
erreicht ist, beginnt die 1. Kolbenbewegung.

1. Kolbenbewegung von links nach rechts. Ventile Nr. 31 und
   Nr. 21 öffnen kurz vor Erreichung des Endpunktes. Ventile
   Nr. 31 und Nr. 21 schliessen. Klappensteller Nr. 36 so
   einstellen, dass Wärme von Austauscher Nr. 6 auf
   Austauscher Nr 11 umgeleitet wird und das Wasserventil
   Nr. 42 so regulieren, dass Wasser auf Austauscher Nr. 6
   umgeleitet wird.

2. Kolbenbewegung von rechts nach links. Ventile Nr. 17 und
   Nr. 27 öffnen kurz vor Erreichung des Endpunktes. Ventile
   Nr. 17 und Nr. 27 schliessen. Klappensteller Nr. 37 so
   einstellen, dass Wärme von Austauscher Nr. 12 auf Nr. 7
   umgeleitet wird. Das Wasserventil Nr. 43 so regulieren,
   dass das Wasser von Austauscher Nr. 7 auf Nr. 12 umgeleitet wird.

3. Kolbenbewegung von links nach rechts. Ventil Nr. 33 und
   Nr. 23 öffnen kurz vor Erreichung des Endpunktes. Ventile
   Nr. 33 und Nr. 23 schliessen. Klappensteller Nr. 38 so
   einstellen, dass Wasser von Austauscher Nr. 8 auf Austauscher Nr. 13 umgeleitet wird. Das Wasserventil Nr. 44
   so einstellen, dass Wasser auf Austauscher Nr. 8 umgeleitet wird.

4. Kolbenbewegung von rechts nach links. Ventile Nr. 19 und Nr. 29 öffnen kurz vor Erreichung des Endpunktes. Ventile Nr. 19 und Nr. 29 schliessen. Klappensteller Nr. 39 stellt Wärme von Austauscher Nr. 9 auf Austauscher Nr. 14 um. Wasserventil Nr. 45 stellt Wasser von Austauscher Nr. 9 auf Austauscher Nr. 14 um.

5. Kolbenbewegung von links nach rechts. Ventil Nr. 35 und Nr. 25 öffnen kurz vor Erreichung des Endpunktes. Ventile Nr. 35 und Nr. 25 schliessen. Klappensteller Nr. 40 stellt Wärme von Austauscher Nr. 10 auf Austauscher Nr. 15 um. Wasserventil Nr. 46 stellt Wasser von Austauscher Nr. 15 auf Nr. 10 um.

Die Reihenfolge der Kolbenbewegungen wird fortgesetzt mit taktweisem öffnen der Ventile Nr. 16 und Nr. 26, Nr. 22 und Nr. 32, Nr. 18 und Nr. 28, Nr. 24 und Nr. 34, Nr. 20 und Nr. 30. Die Klappensteller, Wasserventile gehen taktweise in die Ausgangsstellungen zurück. Nachfolgend kann der Bewegungsablauf des Kolbens, der Ventile und der Klappensteller wie auf 1. beschrieben, neubeginnen.

Patentensprüche

1. Thermischer Antrieb, dadurch gekennzeichnet aufbauend auf Druckgefälle, herbeigeführt durch ein oder mehrere Wärmeaustauscher, die mit Kältemittelfluid, dessen Beschaffenheit so sein soll, dass es bei möglichst kleinem Temperaturunterschied einen möglichst grossen Druckunterschied erzeugt. So die Kältemittel R12, R13, R13B1, R22, R23, R500 und R502. Es können auch andere flüssige oder gasförmige Medien verwendet werden, die bei kleinen Temperaturunterschieden unterschiedliche Drücke erzeugen.

2. Doppelkolben, dadurchgekennzeichnet mit beidseitigen Kraftübertragungsbleuel. Zylinder mit zwei oder mehreren Ein- und Ausgängen. Anstelle des Kolbens kann auch eine Membrane eingesetzt werden.

3. Der Aufbau der Anlage, dadurch gekennzeichnet bestehend aus Doppelkolben mit beidseitigen Kraftübertragungen, zwei bis eine unbeschränkte Anzahl von Wärmeaustauschern, wie sie in Kälte-, Heizungs- und Lüftungstechniken allgemein verwendet werden. Düsenstöcke für Wasserberieselung.

Figur Nr. 1

Figur Nr. 2

Figur Nr. 3

))) Europäisches
Patentamt

**EUROPÄISCHER RECHERCHENBERICHT**

EP 82 81 0310

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| Y | FR-A-2 360 771 (RENAULT) * Seite 2, Zeile 29 bis Seite 3, Zeile 33; Figur 1 * | 1,2 | F 03 G 7/00 |
| | --- | | |
| Y | FR-A-2 385 910 (AIQUI) * Seite 1, Zeile 9 bis Seite 2, Zeile 4 * | 1,2 | |
| | --- | | |
| Y | FR-A-2 428 157 (DUCHAMP) * Seite 1, Zeilen 1-8; Seite 3, Zeile 5 bis Seite 4, Zeile 12; Seite 6, Zeile 17 bis Seite 7, Zeile 3 * | 1,2 | |
| | --- | | |
| Y | US-A-4 068 476 (KELSEY) * Spalte 2, Zeile 31 bis Spalte 3, Zeile 9; Spalte 3, Zeilen 17-27 * | 1,2 | RECHERCHIERTE SACHGEBIETE (Int. Cl. ³) |
| | --- | | |
| Y | US-A-4 150 923 (WARDMAN) *Spalte 3, Zeilen 50-65; Spalte 4, Zeilen 27-49; Spalte 5, Zeilen 15-38; Spalte 6, Zeilen 5-19 * | 1 | F 03 G |
| | --- | | |
| Y | DE-A-2 321 267 (RUPP) * Seite 4, Patentansprüche 1-3 * | 1 | |
| | --- | | |
| Y | CH-A- 134 463 (SPITZER & MAGRISO) * Seite 2, Patentansprüche; Figuren 1-3 * | 1 | |
| | ----- | | |

Der vorliegende Recherchenbericht wurde für alle Patentansprüche erstellt.

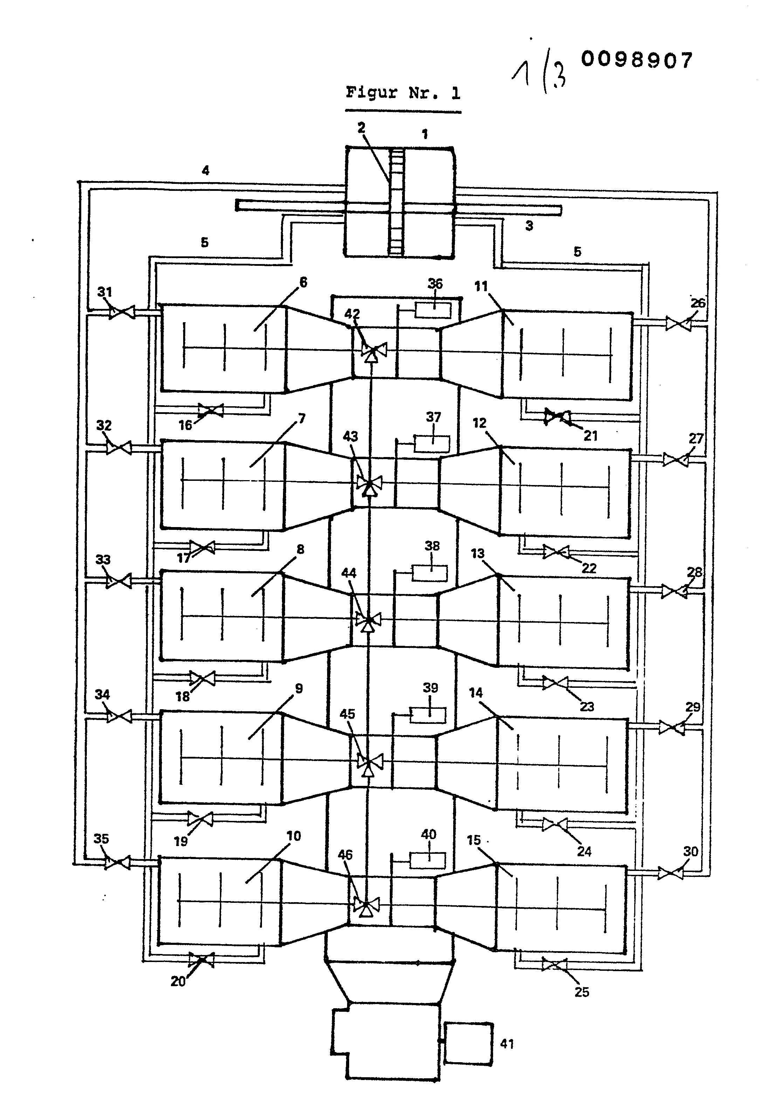

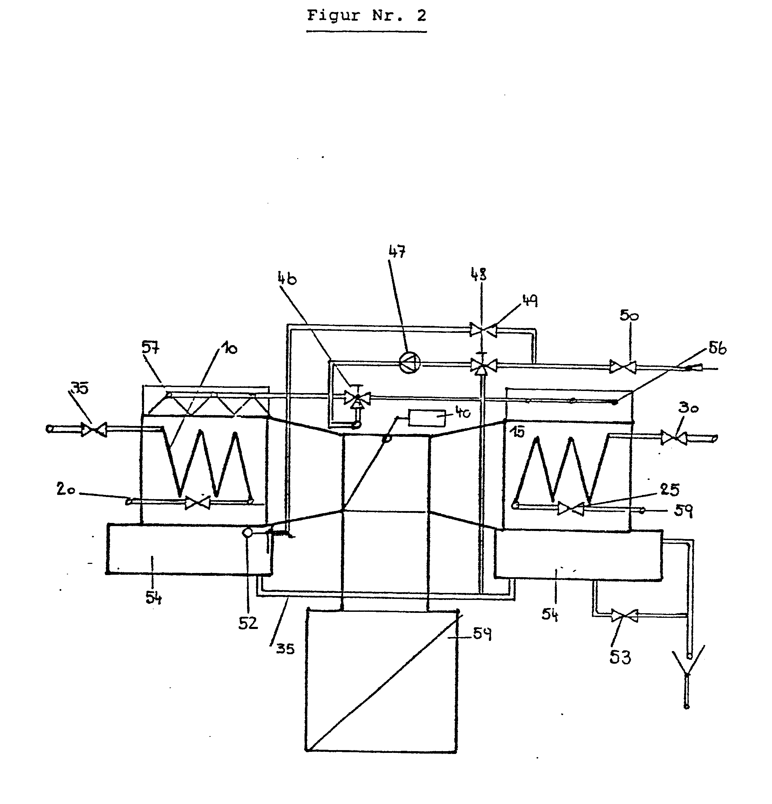

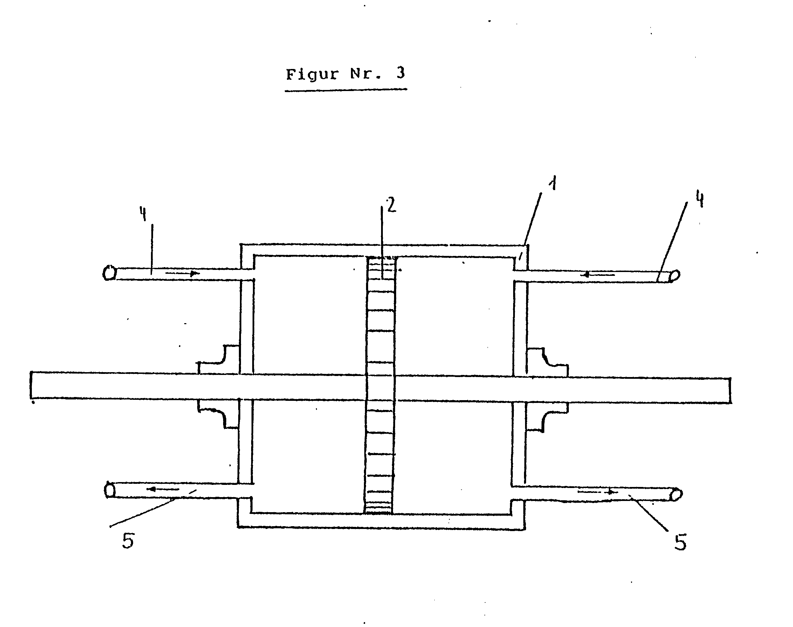

| Recherchenort DEN HAAG | Abschlußdatum der Recherche 10-03-1983 | Prüfer TATUS W.D. |
|---|---|---|